# EUROPEAN PATENT APPLICATION

(11) **EP 2 234 031 A1**
(43) Date of publication of application: **29.09.2010**
(21) Application number: 10155247.9
(22) Date of filing: 02.03.2010
(51) Int. Cl.: G06F 21/22

(54) **Obfuscation**

(30) Priority: 24.03.2009 IN CA05282009
(71) Applicant: SafeNet, Inc., Belcamp, MD 21017 (US)
(72) Inventor: Singh, Baibhav, Noida, Uttar Pradesh (IN); Saxena, Nandita, 110017 New Delhi (IN); Ravinadh, Vanagala Sada Siva, Noida Uttar Pradesh (IN); Chauhan, Ravindra Singh, 201001 Ghaziabad (IN)
(74) Representative: Walker, Stephen

(57) **Abstract**

In an embodiment of a method of making a conditional jump in a computer running a program, an input is provided, conditional on which a substantive conditional branch is to be made. An obfuscatory unpredictable datum is provided. Code is executed that causes an obfuscatory branch conditional on the unpredictable datum. At a point in the computer program determined by the obfuscatory conditional branch, a substantive branch is made that is conditional on the input.

## Description

### BACKGROUND

The disclosure relates to hindering, preventing or detecting reverse engineering or "hacking" of computer code.

It is not unknown for persons to attempt to analyze or alter the functioning of a computer program without the permission of the author or proprietor of the computer program. Alteration of a computer program may be used as a tool for analysis, or for the purpose of causing the program to produce a real-world result not intended by the author.

Various measures have been proposed to hinder reverse engineering, including "obfuscation," which typically involves including functionless, unnecessary, or illogically placed code that makes it more difficult for an analyst without access to the original author's documentation to understand how the code functions.

One part of much computer code that can be of significance in any attempt at reverse engineering is the "conditional branch" or "conditional jump," a point at which the execution of the code can take different courses, depending on some variable factor or other event. The conditional branch may cause a jump to a different part of the program on both outcomes of the condition. More usually, the conditional branch is formed by a command to jump if a specified condition is complied with. There is then an implicit command to continue at the command following the conditional jump command if the condition is not complied with. In general, in the present specification the choice of whether to have a jump on one branch or on both, and if there is only one jump the choice of which branch has the jump, is insignificant, and the terms "conditional jump" and "conditional branch" are used without distinction for all three cases.

A reverse engineer can typically easily recognize a conditional jump statement in the compiled binary code of the program. Conditional statements are easily located and analyzed using debuggers that are now generally available. The reverse engineer may then disable the conditional jump so that the program always follows the same subsequent course, thus making its operation easier to understand. The malicious hacker may alter the conditional jump, so that the subsequent course of execution does not correctly comply with the variable factor or other event. That may, for example, deactivate a security or integrity test, or cause a normal input to produce an abnormal output. Conventional obfuscation does not prevent the reverse engineer from identifying the conditional jump command in the binary code.

### SUMMARY

A method of, and a computer program for, making a conditional jump in a computer running the program, are disclosed comprising providing in the computer an input conditional on which a substantive conditional branch is to be made. There is provided in the computer an obfuscatory unpredictable datum. In the computer program, code is executed causing an obfuscatory branch conditional on the unpredictable datum. At a point in the computer program determined by the obfuscatory conditional branch, a substantive branch conditional on the aforementioned input is made. In general, a "substantive conditional branch" is any conditional branch that is relevant to the real purpose of the program.

In an embodiment, the obfuscatory conditional branch may be repeated, so that the program works down a branching tree structure. The substantive conditional branch is made at a point in the computer program, a twig of the tree, that is chosen from among several available instances of the substantive conditional branch by the cumulative effect of the successive obfuscatory conditional branches.

In an embodiment, the unpredictable datum selects a row in a matrix, and the obfuscatory conditional branches are determined by entries in the selected row.

In an embodiment, the substantive conditional branch may cause the program to proceed to a point in the program dependent on which instance of the substantive conditional branch that was made, and the program may then proceed, optionally through further obfuscation, to a point that is independent of which instance of the substantive conditional branch was made. In one example, the different instances of the substantive conditional branch may send the program to a sequence of different destinations, and the program may then iterate through that sequence, ending at the independent point. In another example, after the substantive conditional branch, there may be a further unpredictable choice, for example, the program may iterate additional obfuscatory code an unpredictable number of times.

In an embodiment, other computer program code may be included between the obfuscatory conditional branch and the substantive conditional branch, or among obfuscatory code after the substantive conditional branch. Where there are two or more successive obfuscatory conditional branches, the other program code may be at any point after the first obfuscatory conditional branch. The other program code may be inoperative obfuscation. If it is executed, it may be pointless obfuscation, or it may be incongruous code from a part of the program not closely related to the subject of the substantive conditional branch, or it may be related code that is duplicated in the obfuscatory conditional branches. Especially in the latter case, the other code may be code that a hacker would wish to alter. Then, if the hacker does not completely understand the obfuscatory structure, the hacker may alter only one or some copies of the other code, and may be hindered in further hacking because the altered code executes sometimes, and the unaltered code executes sometimes.

In an embodiment, the execution of such other computer program code may be monitored in an attempt to detect discrepancies between executions of the other program code following different choices of obfuscatory conditional branch. For example, if a hacker attempts to alter the other program code, without realizing the full obfuscatory structure, the hacker may alter the other program code on one path through the obfuscation tree but not on another path, so that successive iterations through the tree cause distinctively different results.

In an embodiment, the input may be provided from another part of the same program, for example, as a result of a computation. Alternatively, the input may be sent or fetched from outside the program.

In an embodiment, the unpredictable datum may be provided by invoking from within the program a source of unpredictable data. The source may be, for example, a random or pseudorandom number generator. Alternatively, the unpredictable datum may be a datum or result from an unrelated part of the same or another computer program. Because the object is to obfuscate, an incongruous link may be beneficial.

### BRIEF DESCRIPTION OF THE DRAWINGS

The above and other aspects, features, and advantages will be more apparent from the following more particular description thereof, presented in conjunction with the following drawings wherein:

FIG. 1 is a schematic diagram of a computer network.

FIG. 2 is a flow-chart of a process for obfuscating a conditional branch.

FIG. 3 (consisting of FIGS. 3A, 3B, 3C, and 3D) is an example of computer source code for carrying out the process of FIG. 2.

### DETAILED DESCRIPTION OF THE DRAWINGS

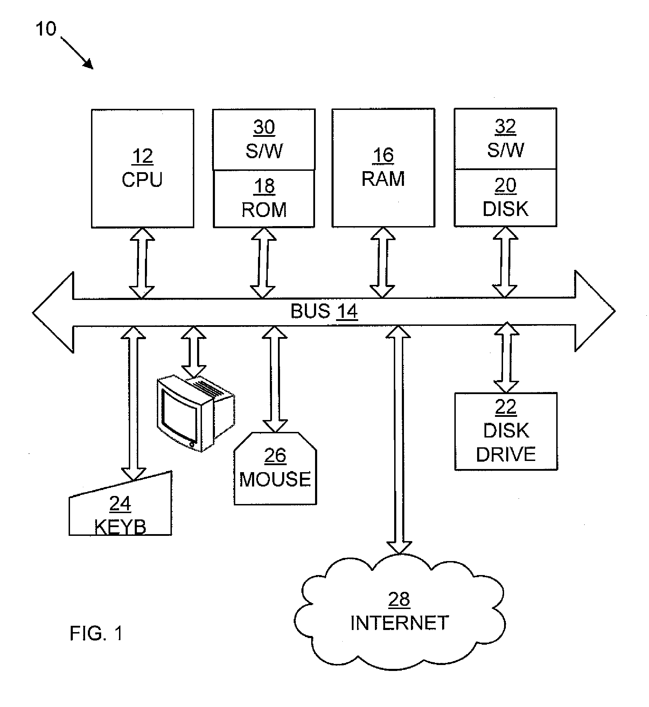

Referring to the accompanying drawings, and initially to FIG. 1, one embodiment of a computer system, indicated generally by the reference number 10, comprises a processor 12, connected by a bus 14 to computer readable storage media such as RAM 16, ROM 18, a fixed disk 20, and a removable disk 22. The bus 14 is also connected to I/O devices such as a keyboard 24, a pointing device such as a mouse 26, and an internet connection 28. The peripherals 16 through 28 are merely examples. As is known to those skilled in the art, other forms of storage and I/O may be provided, and still other forms are likely to be developed in the future. The processor 12 runs various forms of software, including operating system and other secure software 30, which may be stored in ROM 18 or on disk 20, and application software 32, which may be delivered on a removable disk 20 or over the internet 28, and may be stored on fixed disk 20. RAM 16 is commonly used for temporary storage of programs and data in active use.

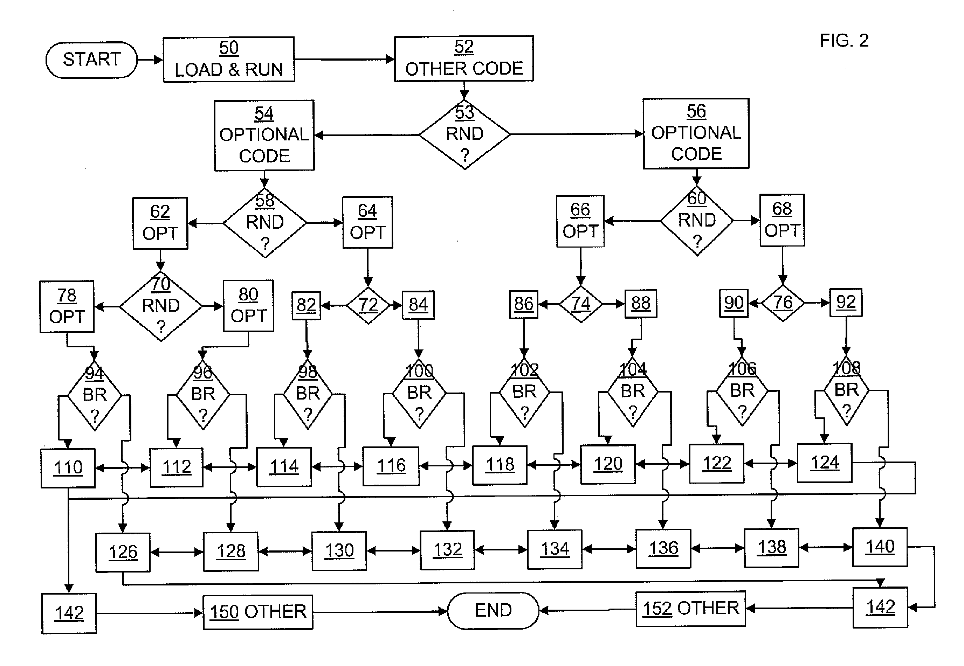

Referring also to FIG. 2, one embodiment of a computer program 40 according to the invention may be used in conjunction with computer system 10. Computer program 40 may be stored, when not in use, on ROM 18 or fixed disk 20, and may be stored when in active use on RAM 16. Computer program 40 may be any computer program that it is desired to protect from hacking or reverse engineering. Innumerable examples of such programs are known to those skilled in the art and, in the interests of conciseness, parts of such a program not relevant to the present disclosure are not described in detail.

In block 50 of FIG. 2, computer program 40 is loaded and execution of the program starts. In block 52, various commands are executed, until the program arrives at a conditional branch that is to be obfuscated. In block 53, an unpredictable choice is made, and the program proceeds to either block 54 or block 56. The unpredictable choice may be random, pseudorandom, or based on some datum or result not closely related to the conditional branch that is being obfuscated.

Blocks 54 and 56 are optional. In block 54 or block 56, if present, the program executes code that may do nothing, may serve a purpose in another part of program 40, or may serve to detect that block 54 or block 56 has been executed, in which case the code may be the same or different for the two blocks. Block 54 or block 56 may comprise code for two or more of those functions. Alternatively, or in addition, block 54 and/or block 56 may represent code that is not actually executed at all, but merely makes the compiled program 40 harder to read. Blocks 54 and 56 may be the same or different. Even if blocks 54 and 56 serve a common useful purpose, they may use different code, in order to make it less obvious that they are duplicates.

The program then proceeds to block 58 or block 60. In block 58 or block 60, an unpredictable choice is made, and the program proceeds to optional block 62, 64, 66, or 68. In block 62, 64, 66, or 68, if present, the program executes code that may do nothing, may serve a purpose in another part of program 40, or may serve to detect that the block in question has been executed, in which case the code may be the same or different for the four blocks. Blocks 62, 64, 66, and 68 may comprise code for two or more of those functions. Alternatively, or in addition, blocks 62, 64, 66, and/or 68 may represent code that is not actually executed at all, but merely makes the compiled program 40 harder to read. In order to make the obfuscation less obvious, the code for blocks 54, 56, 62, 64, 66, and 68 may be different even if the end result of executing two of those blocks is the same.

The program then proceeds to one of blocks 70, 72, 74, and 76, where a further unpredictable choice is made, from which the program proceeds to the selected one of optional blocks 78, 80, 82, 84, 86, 88, 90, and 92. The above description of blocks 54, 56, 62, 64, 66, and 68 applies also to blocks 78, 80, 82, 84, 86, 88, 90, and 92, and in the interests of conciseness is not repeated.

The number of successive levels of unpredictable choices may be greater or less than the three illustrated. The number of levels may be different in different branches, although in general equal numbers are likely to be more secure, because a very short path could present a vulnerability to an astute or lucky hacker. However, three levels, leading to eight twigs, is believed to be convenient for many purposes.

The basis for this and other unpredictable choices may depend on the circumstances, the degree of obfuscation required, the available sources of unpredictability, and the individual programmer writing the program 40. A roughly equal probability of the two outcomes is usually preferred. A choice based on a pseudorandom number is usually adequately secure and easy to implement, but the occasional use of something more whimsical may be advantageous. Where a plurality of iterations of an unpredictable choice are made in quick succession, a single pseudorandom number or other unpredictable datum may be used to choose an entire path, for example, by selecting a line in a matrix, and then using the terms in that line to specify the successive choices defining that path. In the example shown in FIG. 2, the matrix may then have eight lines, each containing a different permutation of three binary digits.

From optional blocks 78, 80, 82, 84, 86, 88, 90, and 92, the program 40 proceeds to blocks 94, 96, 98, 100, 102, 104, 106, and 108, where a substantive input is obtained, and a substantive conditional branch is executed depending on that input. The eight substantive conditional branch blocks 94, 96, 98, 100, 102, 104, 106, and 108 may be different in form, even though they are testing the same condition in substance. In a simple example, different blocks might test if (x > y), if (x - y > 0), if (x + k > y + k), and so on. The skilled person will understand how to create a desired number of tests, of a desired level of obscurity, for the comparisons or other conditions on which a conditional branch is typically based.

Depending on the outcome of the substantive conditional branch, the program 40 proceeds to one of blocks 110, 112, 114, 116, 118, 120, 122, or 124 for one substantive outcome, or to one of blocks 126, 128, 130, 132, 134, 136, 138, or 140 for the other substantive outcome. If the number of blocks in each outcome group 110, 112, 114, 116, 118, 120, 122, and 124, or 126, 128, 130, 132, 134, 136, 138, and 140, is equal to the number of substantive conditional branch blocks 94, 96, 98, 100, 102, 104, 106, and 108, then each substantive conditional branch block may pass control to a specific block in each outcome group. Alternatively, the outcome of the substantive conditional branch may choose the outcome group, and the specific block in each outcome group may be chosen unpredictably, in which case the number of blocks in an outcome group may be different from the number of substantive conditional branch blocks.

From the chosen outcome block 110, 112, 114, 116, 118, 120, 122, 124, or 126, 128, 130, 132, 134, 136, 138, 140, the program 40 proceeds iteratively to an adjacent block until control reaches a "real" outcome block 142 or 144. This process may be as simple as a number that determined the initial choice of block counting down to zero, or may be a more complicated process. Control may pass in one direction along the blocks in each outcome group, or in an unpredictably chosen direction with the blocks forming a logical ring, as shown. The real outcome block 142 or 144 may be one of the chosen outcome blocks, or may be a separate block From the real outcome block 142 or 144, the program 40 proceeds to block 150 or 152, respectively, where other code is executed depending on the outcome of the substantive conditional branch.

In an embodiment, additional optional blocks similar to blocks 54, 56, etc. may be included between substantive conditional branch blocks 94, etc. and the outcome blocks 110, etc. or 126, etc. Such additional optional blocks may be the same or different for the two branches. Further optional blocks may be included within the outcome groups. However, such optional blocks would be executed and skipped in a predictable manner, or the number fo iterations of such an optional block may vary in a predictable manner, depending on which outcome block the program 40 entered the outcome group at, and such predictability may cause a vulnerability. The programmer should therefore use his or her skill and judgment in choosing suitable material for such optional blocks so as to

If a reverse engineer attempts to analyze the path through the program blocks shown in FIG. 2, the presence of fifteen conditional branch commands instead of one, and of at least sixteen distinct alternative paths through those program blocks, can confuse and hinder the analysis. For example, a debugging tool will typically be able to locate the conditional branches, but the debugger will not be able to distinguish obfuscatory from substantive conditional branches, and will not be able to explain why there are so many branches. If a hacker attempts to alter the substantive conditional branch command, for example, to ensure that the outcome is independent of the substantive input, the hacker must find and alter all eight instances of the substantive conditional branch, or must understand and disable the obfuscatory conditional branch tree, in order to get reliable results. Similarly, if any of the optional code blocks serves a real function and the hacker wishes to alter that block, the hacker must either find and alter every instance of that code block, or must defeat any preceding obfuscatory conditional branches, in order to obtain a consistent result.

As an additional safeguard, the execution of some or all of the optional functional blocks 54, etc. may be monitored. For example, tampering with any of the obfuscatory conditional branches could be detected by monitoring the relative rates of execution of a pair of optional functional blocks subsequent to and on opposite sides of that obfuscatory conditional branch. For example tampering with, or bypassing of, one of the optional functional blocks could be detected by observing a result of executing the block at that level in the tree on successive passes through the tree, and detecting if successive passes on successive paths produced the same or different results.

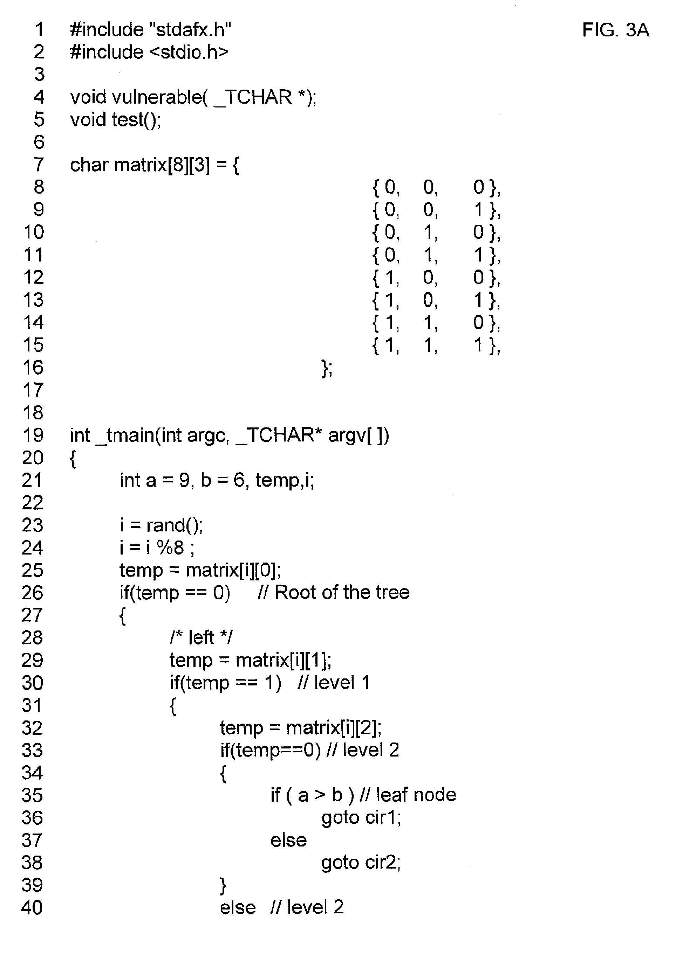

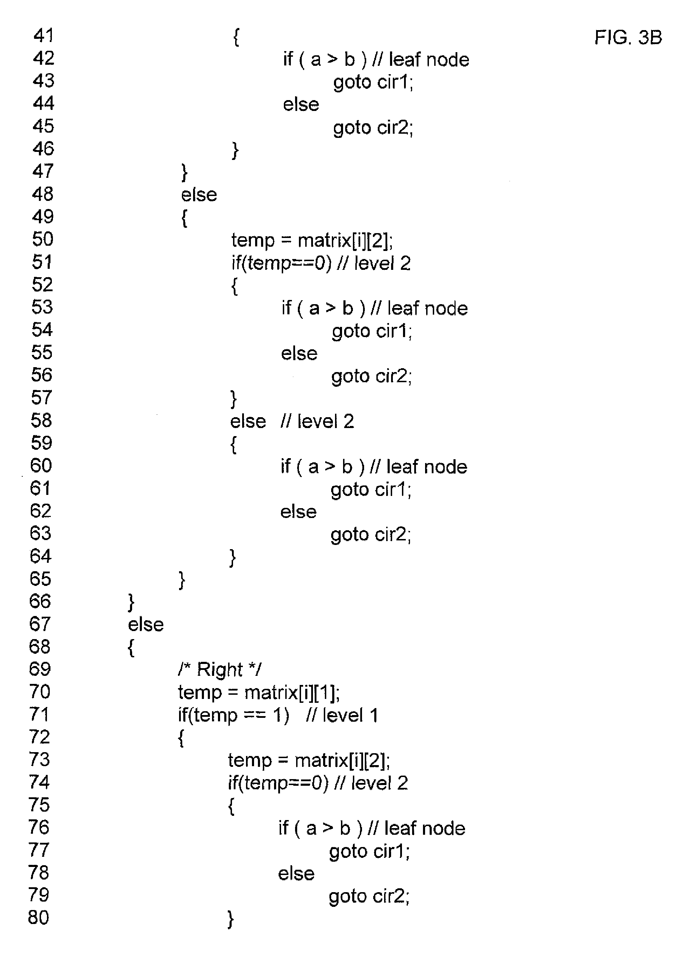

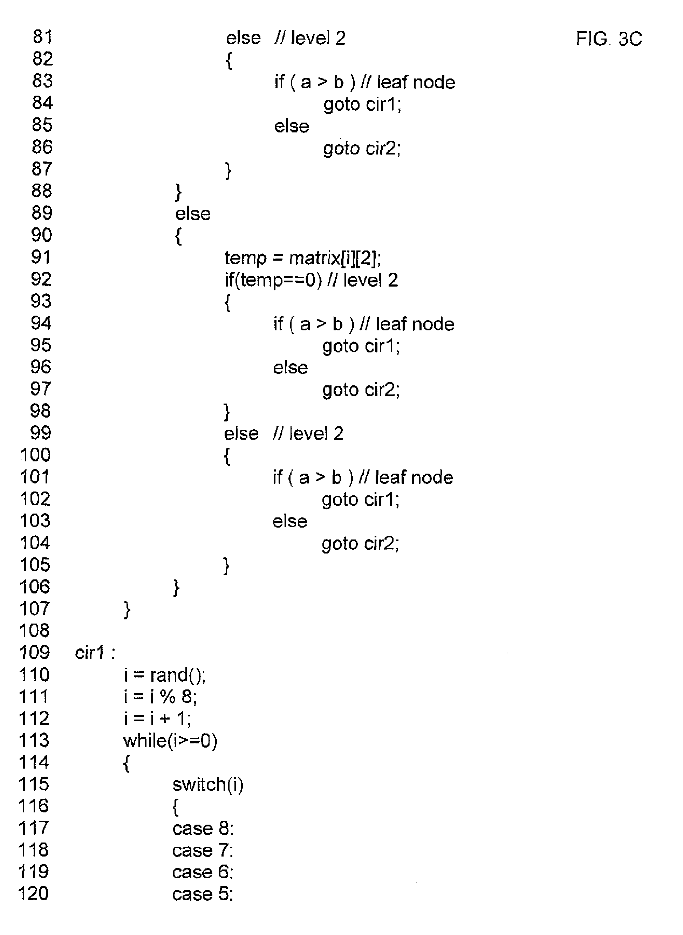

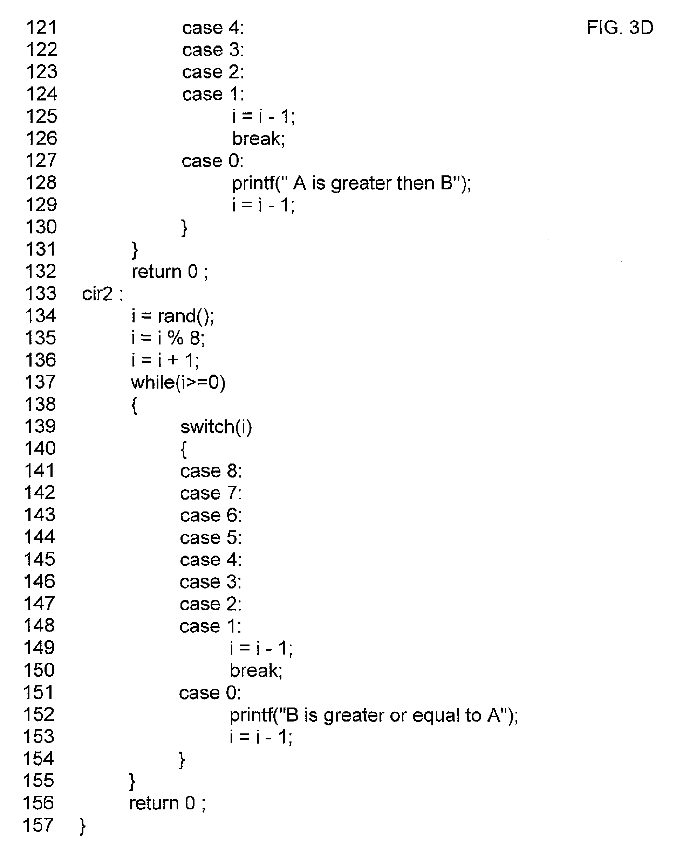

Referring now to FIGS. 3A, 3B, 3C, and 3D, collectively referred to as "FIG. 3," there is shown an example of source code for an embodiment of a computer program to carry out the process of FIG. 2. The lines of code have been numbered for ease of reference.

In lines 7-15, there is defined a matrix of eight rows and three columns, each containing a binary digit. The number of columns is chosen to be equal to the number of levels of obfuscatory branching, see 53 etc., 58 etc., 70 etc. in FIG. 2. In this example, the number of rows is chosen so that each possible different row occurs once, and for clarity the rows are listed in systematic order. Other arrangements are possible. For example, the rows might be shuffled to make the matrix less easily recognized in the binary object code. In lines 23 and 24, a pseudorandom number i representing a row number in the matrix is generated. The successive digits in row i will be used as the unpredictable data on which the successive levels of obfuscatory branch decision will be based.

At line 25 the term matrix[i][0], the first digit of matrix row i, is read, and in lines 26 and 67 (corresponding to step 53 in FIG. 2) the program branches to different parts of the code depending on whether matrix[i][0] is 0 or 1. In the interests of clarity, the two alternative parts, lines 27-66 and 68-107, are shown as being identical except for the identifying captions "left" and "right" in lines 28 and 69. However, the two parts could instead be written to appear different, even if they carry out in substance the same computations. Such difference may make it harder for the hacker or reverse engineer first to realize that there is duplicated branching, and second to identify all the branches. Further in the interests of clarity and brevity, optional code such as blocks 54, 56, 62 etc., 78 etc., of FIG. 2 is not included in FIG. 3.

At lines 29 and 30 and 48, corresponding to second-level obfuscatory conditional branch 58 in FIG. 2, the program reads the term matrix[i][1], the second digit of matrix row i, and branches accordingly. Lines 70, 71, and 89, corresponding to the other second-level obfuscatory conditional branch 60 in FIG. 2 are identical and, in the interests of conciseness, will not be described separately. At lines 32, 33, and 40, corresponding to third-level obfuscatory conditional branch 70 in FIG. 2, the program reads the term matrix[i][2], the third digit of matrix row i, and branches accordingly. Lines 50, 73, and 91 correspond to line 32 for third-level obfuscatory conditional branches 72, 74 and 76.

Finally, at lines 35-38, 42-45, 53-56, 60-63, 76-79, 83-86, 94-97, and 101-104, the program reaches the eight different points, corresponding to substantive conditional branches 94, 96, 98, 100, 102, 104, 106, and 108 in FIG. 2. In this example, the input on which the branch is conditional is simply the difference between the values **a** and **b,** which are predefined in line 21. In a practical embodiment, the input might be dependent on values calculated in another part of the program, data received from outside the program, or both.

From whichever substantive conditional branch was selected, the program proceeds to **cir1** (line 109) if **a** > **b**, and to **cir2** (line 133) if **a** < **b**. In each of **cir1** and **cir2,** a new random value **i,** with a value from 1 to 8, is used as an argument for a **switch** statement, the eight values corresponding to blocks 110 through 124 or 126 through 140 in FIG. 2. The program then loops, repeatedly decrementing **i** until **i** = 0, corresponding to block 142 or 144 in FIG. 2, whereupon a **printf** statement outputs whether A is greater than B, corresponding to block 150 or 152 in FIG. 2. In the interests of clarity, **cir1** and **cir2** are shown as identical. In a practical embodiment, they may be completely different, and even if they are of similar function they may be differently expressed. As mentioned above, other code may be interpolated before or within **cir1** and **cir2.**

Although specific embodiments have been described, the skilled reader will understand how features of different embodiments may be combined and substituted without departing from the scope of the invention.

For example, FIG. 2 shows specific obfuscatory structures before and after the substantive conditional branch. Either of those obfuscatory structures could be used with no obfuscation, or a different form of obfuscation, on the other side of the substantive conditional branch.

The preceding description of the presently contemplated best mode of practicing the disclosed system is not to be taken in a limiting sense, but is made merely for the purpose of describing general principles of operation of the disclosed system. The full scope of protection should be determined with reference to the claims.

## Claims

1. A method of making a conditional jump in a computer running a program, comprising:
providing in a computer an input conditional on which a substantive conditional branch is to be made;
providing in the computer an obfuscatory unpredictable datum;
in a computer program, executing code causing an obfuscatory branch conditional on the unpredictable datum; and
at a point in the computer program determined by the obfuscatory conditional branch, making a substantive branch conditional on said input.

2. A method according to claim 1, further comprising repeating the obfuscatory conditional branch, and making the substantive conditional branch at a point in the computer program determined by the obfuscatory conditional branches.

3. A method according to claim 2, wherein the unpredictable datum selects a row in a matrix, and the obfuscatory conditional branches are determined by entries in the selected row.

4. A method according to claim 1, further comprising proceeding from the substantive conditional branch to a point in the program dependent on the point at which the substantive conditional branch was made, and then proceeding to a point that is independent of the point at which the substantive conditional branch was made.

5. A method according to claim 4, wherein proceeding from the point dependent on the point at which the substantive conditional branch was made to the point independent of the point at which the substantive conditional branch was made comprises iterating until the point independent is reached.

6. A method according to claim 1, further comprising, after the substantive conditional branch, iterating additional obfuscatory code an unpredictable number of times.

7. A method according to claim 1, further comprising executing other computer program code between said obfuscatory conditional branch and said substantive conditional branch.

8. A method according to claim 7, further comprising monitoring the execution of said other computer program code, and attempting to detect discrepancies between executions of the other program code following different choices of obfuscatory conditional branch.

9. A method according to claim 1, wherein providing an input comprises providing the input from another part of the same program.

10. A method according to claim 1, wherein providing an unpredictable datum comprises invoking from within the program a source of unpredictable data.

11. Computer readable storage media containing instructions arranged in use to cause a computer to:
provide an input conditional on which a substantive conditional branch is to be made;
provide an obfuscatory unpredictable datum;
cause an obfuscatory branch conditional on the unpredictable datum; and
at a point in the instructions determined by the obfuscatory conditional branch, make a substantive branch conditional on said input.

12. Computer readable storage media according to claim 11, further comprising instructions arranged in use to cause the computer to repeat the obfuscatory conditional branch, and to make the substantive conditional branch at a point in the instructions determined by the obfuscatory conditional branches.

13. Computer readable storage media according to claim 11, further comprising instructions arranged in use to cause the unpredictable datum to select a row in a matrix, and the obfuscatory conditional branches to be determined by entries in the selected row.

14. Computer readable storage media according to claim 11, further comprising instructions arranged in use to cause the computer to proceed from the substantive conditional branch to a point in the instructions dependent on the point at which the substantive conditional branch was made, and then proceed to a point that is independent of the point at which the substantive conditional branch was made.

15. Computer readable storage media according to claim 14, further comprising instructions arranged in use to cause the computer to proceed from the point dependent on the point at which the substantive conditional branch was made to the point independent of the point at which the substantive conditional branch was made by iterating until the point independent is reached.

16. Computer readable storage media according to claim 11, further comprising instructions arranged in use to cause the computer, after the substantive conditional branch, to iterate additional obfuscatory code an unpredictable number of times.

17. Computer readable storage media according to claim 11, further comprising instructions arranged in use to cause the computer to execute other computer program code between said obfuscatory conditional branch and said substantive conditional branch.

18. Computer readable storage media according to claim 17, further comprising instructions arranged in use to cause the computer to monitor the execution of said other computer program code, and attempt to detect discrepancies between executions of the other program code following different choices of obfuscatory conditional branch.

19. Computer readable storage media according to claim 11, further comprising instructions arranged in use to cause the computer to provide said input from another part of the same program.

20. Computer readable storage media according to claim 11, further comprising instructions arranged in use to cause the computer to provide said unpredictable datum by invoking from within the program a source of unpredictable data.
